# EUROPEAN PATENT SPECIFICATION

(11) **EP 3 412 641 B1**
(45) Date of publication and mention of the grant of the patent: **11.08.2021**
(21) Application number: 17174463.4
(22) Date of filing: 05.06.2017
(51) Int. Cl.: C04B 35/80, C04B 35/622, C04B 35/573, C04B 35/591, C04B 38/00, B33Y 70/00, B33Y 80/00, C04B 111/00

(54) **FIBROUS NETWORKS OF SI3N4 WITH COMPLEX GEOMETRY AND MANUFACTURING THEREOF**
FASERNETZWERKE VON SI3N4 MIT KOMPLEXER GEOMETRIE UND DEREN HERSTELLUNG
RÉSEAUX FIBREUX DE SI3N4 À GÉOMÉTRIE COMPLEXE ET LEUR PROCÉDÉ DE FABRICATION

(43) Date of publication of application: 12.12.2018
(73) Proprietor: Tallinn University of Technology, 19086 Tallinn (EE)
(72) Inventor: LIU, Le, 19086 Tallinn (EE); MINASYAN, Tatevik, 19086 Tallinn (EE); AYDINYAN, Sofiya, 19086 Tallinn (EE); AGHAYAN, Marina, 19086 Tallinn (EE); HUSSAINOVA, Irina, 19086 Tallinn (EE)
(74) Representative: Koppel, Mart Enn

(56) References cited:
- DE-A1- 19 730 742
- US-A- 5 182 170
- Le Liu: "Fibrous Silicon Nitride Network of Multi-Axis Architecture", Master Thesis, 30 May 2017 (2017-05-30), XP055431362, Tallinn, Estonia Retrieved from the Internet: URL:https://digi.lib.ttu.ee/i/file.php?DLI D=7766&t=1 [retrieved on 2017-12-04] -& Le Liu: "Mitmesuunalise arhitektuuriga fiibriline silikoon nitriidi võrgustik", , 30 May 2017 (2017-05-30), XP055431444, Retrieved from the Internet: URL:https://digi.lib.ttu.ee/i/file.php?DLI D=7766&t=1 [retrieved on 2017-12-04]
- B R BIRMINGHAM ET AL: "Solid Freeform Fabrication of Silicon Nitride Shapes by Selective Laser Reaction Sintering (SLRS)", SOLID FREEFORM FABRICATION SYMPOSIUM, 1 January 1995 (1995-01-01), pages 389-395, XP055431360, Austin
- L RABINSKIY ET AL: "Fabrication of porous silicon nitride ceramics using binder jetting technology", I O P CONFERENCE SERIES: MATERIALS SCIENCE AND ENGINEERING, vol. 140, 1 July 2016 (2016-07-01), page 012023, XP055431241, GB ISSN: 1757-8981, DOI: 10.1088/1757-899X/140/1/012023
- VARONG PAVARAJARN ET AL: "Catalytic Effects of Metals on Direct Nitridation of Silicon", JOURNAL OF THE AMERICAN CERAMIC SOCIETY., vol. 84, no. 8, 1 August 2001 (2001-08-01) , pages 1669-1674, XP055431589, US ISSN: 0002-7820, DOI: 10.1111/j.1151-2916.2001.tb00897.x

## Description

### Field of technology

The method belongs to the field of a new manufacturing approach method for developing complex structured fibrous Si₃N₄ ceramic composite network structures.

### Background

Because of its high breaking strength, dimensional stability, resistance to high temperature and to corrosion, ceramic/fibre composite is gaining a continuously growing importance. The good properties of the ceramic/fibre composite are based on the combination of a matrix and built-in fibres.

Recently, fibrous ceramics are gaining continuously growing importance, as the nest-like structure of network possess combination of advantages, including low density, high thermal performance and heat flux, high mechanical strength, and electrical conductivity. Several studies have suggested that fibrous structure of the bioscaffolds increases the cell affinity to surface. The fibrillary structure enhances cell proliferation and differentiated function in tissue culture. In addition, fibrous scaffolds with fibre diameters between 50 and 500 nm can provide a better environment for tissue formation in tissue engineering systems compared with traditional scaffolds [2].

The 1D nanostructured ceramics show unusual mechanical strength, therefore being an ideal reinforcing agent for improving the strength and toughness of materials. For example, SiC and Al₂O₃ whiskers were widely studied because of high specific strength, specific stiffness, relatively low specific weight, high corrosion and erosion resistance. Si₃N₄ fibres exhibit outstanding properties such as tensile strength (30-50 GPa), and it is a very desirable reinforcements for engineers [3]. Along with the high flexural strength, SiC possess high temperature of decomposition, good thermal shock resistance, high thermal conductivity, which makes it the most promising ceramic materials for heat exchangers, radiant heating applications, etc. [4].

In spite of the strong general interest in 1D ceramics, there are still problems in producing pure and uniform whiskers/fibres on a large scale in an economical way, moreover to incorporate them into matrix [16]. Potential hazard arising from asbestos fibres is one more challenge that repels the usage of ceramic fibres. Thus, the health precautions should be taken into account while suggesting a complex processing from synthesis to application [5]. The development of economic and less hazardous production of fibre-reinforced composites may open new applications.

Recently an increasing interest emerged in *in situ* formation of nanofibres/whiskers in matrix [6]. This approach allows preventing long-lasting and hazardous process, such as dispersing and mixing 1D nanostructures, and provides formation of more homogenous mixture.

The fabrication processes for ceramic networks with requisite geometry and architecture have been subject to much consideration in order to accommodate and satisfy the wide range of property demands for specific applications. Particularly, biomedical implants are often required to have complex shape to fit into existing bone defects or unusual patient anatomy. Moreover, some implants for spinal repair should have a dense outer region to provide the requisite strength and a porous inner region for bone infiltration and integration [8]. As ceramics have high hardness and low fracture toughness, post-fabrication machining of materials to achieve the desired complexity in shape and architecture can be dicey and costly leading to unnecessary wastage of materials and manufacturing time and resources.

Additive manufacturing (AM) is a well-defined technique to generate near net shape structures, which can provide unprecedented control of internal porosity of ceramic part. The basic principle of AM is to build the designed model layer-by-layer using computer aided design (CAD) program. In this way, a 3D object can be built in almost any geometry, including porous structures [9]. Robocasting, which is a colloidal-based AM, is already applied to prepare ceramic parts, such as aluminium oxide, silicon carbide, silicon nitride, tricalcium phosphate, hydroxyapatite [10]. However, preparation of fibrous network of ceramics by additive manufacturing is not yet succeeded.

L RABINSKIY ET AL: "Fabrication of porous silicon nitride ceramics using binder jetting technology",I O P CONFERENCE SERIES: MATERIALS SCIENCE AND ENGINEERING, vol. 140, 1 July 2016 (2016-07-01), page 012023, describes the additive manufacturing of a fibrous Si₃N₄ preform starting from a Si powder, followed by nitridation in N₂ at 1400°C for 8-10 hours.

DE19730742 describes the manufacturing of a Si₃N₄ porous preform of complex shape by SLS of a Si powder to form a Si₃N₄ shape and nitridizing in N₂ at 1350-1450°C.

### Summary of invention

Disclosed is a new manufacturing method for developing complex structured fibrous Si₃N₄ ceramic composite networks, the method comprising the steps of preparing of a silicon skeleton (or network) from silicon powder by selective laser sintering (SLS), functionalizing (by nitridation) and growing of fibres in the network. Addition of various catalyst, namely Ni, Fe, carbon-black, NiO, MnO, Cr₂O₃, CeO₂, Co₃O₄ and Fe₂O₃ catalyst up to 10 wt.% provides the desired fibre growth (aligned or random) during the functionalizing step.

Such consolidation of 3D ceramic materials by SLS has an extraordinary impact on the industrial production of ceramic components and open new application and new market for ceramic materials. Moreover, it will open a new generation of application for SLS technique in biomedicine, optoelectronics, aerospace industry, etc.

The advantages of the invented method and of the products made by such methods are a low cost of raw materials, a possibility of fabrication products with complex structured ceramics networks: furthermore, the manufacturing process does not require further finishing. The technology is waste-free and environmentally friendly. The obtained ceramic network has fibrous structure, which can result in generation of exceptional properties. The morphology of the network (porosity, fibre diameter, controllable direction of the fibres (aligned or random), etc.) can be controlled.

The method of making fibrous silicon nitride comprises the following steps: selective laser melting of silicon with complex geometry and open porosity; laser current from 400 to 1200 mA, point distance from 10 to 30 µm and an exposure time from 100 to 275 µsec were used; nitridation of shaped silicon component containing catalyst up to 10 wt.% was heated at various temperatures (1100-1700 °C) and duration (at least 1 hour) in the nitrogen or ammonia + nitrogen (up to 50% ammonia) atmosphere (0.1-1 atm), heat treatment of the obtained silicon nitride component at temperature range of 1000-1800 °C dwell time of 1-20 hours is possible to improve the mechanical properties and increase the density of the component if needed. The method allows tailoring the structure of fibrous network and dimensions of silicon nitride fibres via control over a processing temperature and a nitrogen pressure.

### Brief description of the drawings

Fig. 1 is a schematic representation of one example of the invented method using silicon powder to fabricate a specific object, namely a heat sink composed of fibrous silicon nitride;
Fig. 2 shows an XRD pattern of as-produced fibrous silicon nitride components functionalized in (a) nitrogen and (b) 10 vol.% NH3 diluted nitrogen atmosphere;
Fig. 3 is a SEM of the silicon nitride components functionalized in the presence of (a) no catalyst; (b) 1.5 wt. % of chromium catalyst; (c) 1.5 wt. % of cobalt catalyst.

### Examples for carrying out the invention

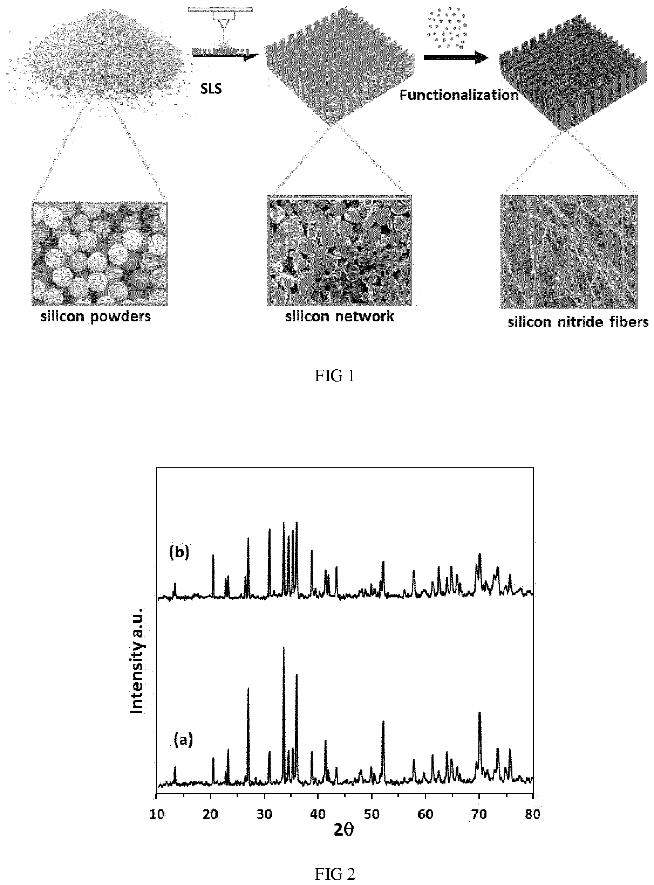

The experimental procedure to prepare complex structure silicon nitride network with fibrous microstructure by means of selective laser sintering combined with functionalization at various atmosphere is presented. The manufacturing method according to one embodiment of the invention is shown in Fig. 1. The method of manufacturing silicon nitride comprises the steps of providing silicon powders, applying selective laser sintering on said silicon powder to create a desired silicon network (structure), and nitridating the product.

More specifically, silicon powder with an average particle size 20 µm and 40 µm were consolidated by selective laser sintering (SLS) under the following conditions: laser current from 400 to 1200 mA; point distance from 10 to 30 µm and an exposure time from 100 to 275 µs. The obtained silicon based network was nitridized in the atmosphere (0.1-1 atm) of either nitrogen, ammonia diluted nitrogen (up to 50% ammonia) correspondingly. To improve the nitridation of silicon, several types of catalysts, such as Ni, Fe, carbon-black, NiO, MnO, Cr₂O₃, CeO₂, Co₃O₄, Fe₂O₃ were added to the silicon network.

The obtained samples were analyzed by X-ray diffraction, Scanning electron microscopy, Elemental analyzer.

The atmosphere of the functionalization drastically influence on the phase composition of the product. For example, nitridation of silicon in nitrogen atmosphere results in formation of β-Si₃N₄, however, some traces of α-Si₃N₄ can also be distinguished (Fig. 2.a). When ammonia diluted nitrogen was used for nitridation of silicon, both α- and β-phases were obtained (Fig. 2b).

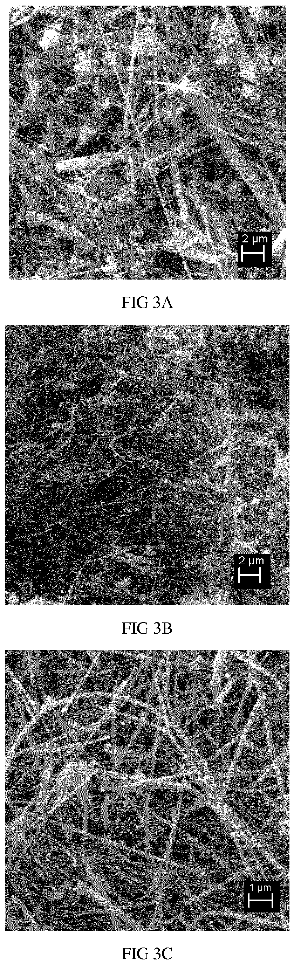

Fig. 3 is a SEM of the silicon nitride components functionalized in the presence of (a) no catalyst; (b) 1.5 wt.% of chromium catalyst; (c) 1.5 wt.% of cobalt catalyst.

The invention relates to the method of preparation thereof.

### References

1. Kamimura, Seiji, Tadao Seguchi, and Kiyohito Okamura. "Development of silicon nitride fiber from Si-containing polymer by radiation curing and its application." Radiation Physics and Chemistry 54.6 (1999): 575-581.
2. Xu, Xin, et al. "Synthesis and Photoluminescence of Eu2+-Doped α-Silicon Nitride Nanowires Coated with Thin BN Film." Journal of the American Ceramic Society 90.12 (2007): 4047 -4049.
3. Wang, Zhihao, et al. "Synthesis and photoluminescence of heavily La-doped α-Si3N4 nanowires via nitriding cyromilled nanocrystalline La-doped silicon powder." Journal of Luminescence 151 (2014): 66-70.
4. Yingjiu Zhang, et al. "A simple method to synthesize Si3N4 and SiO2 nanowires from Si or Si/SiO2 mixture. "Journal of Crystal Growth 233 (2001) 803-808
5. Ahmad, Mashkoor, et al. "One-step synthesis route of the aligned and non-aligned single crystalline α-Si3N4 nanowires." Science in China Series E: Technological Sciences 52.1 (2009): 1-5.
6. Saulig-Wenger, Karine, et al. "Synthesis and Characterization of Cubic Silicon Carbide (β-SiC) and Trigonal Silicon Nitride (α-Si3N4) Nanowires." Developments in Advanced Ceramics and Composites: Ceramic Engineering and Science Proceedings, Volume 26, Number 8 (2005): 341-348.
7. Liang, Feng, et al. "Catalytic Effects of Cr on Nitridation of Silicon and Formation of One-dimensional Silicon Nitride Nanostructure." Scientific Reports 6 (2016).
8. Zhang, Xiaoguang, et al. "Preparation and characterization of the properties of polyethylene glycol@ Si3N4 nanowires as phase-change materials." Chemical Engineering Journal 301 (2016): 229-237.
9. Wang, Feng, et al. "Effects of the reaction conditions in preparation of Si3N4 nanowires." Acta Physico-Chimica Sinica 23.10 (2007): 1503-1507.
10. Liu, Ji-Xuan, et al. "Properties of porous Si3N4/BN composites fabricated by RBSN technique." International Journal of Applied Ceramic Technology 7.4 (2010): 536-545.
11. Li, Gong-Yi, et al. "Long silicon nitride nanowires synthesized in a simple route." Applied Physics A: Materials Science & Processing 93.2 (2008): 471-475.
12. Ahmad, Mashkoor, et al. "Ordered arrays of high-quality single-crystalline α-Si3N4 nanowires: synthesis, properties and applications." Journal of Crystal Growth 311.20 (2009): 4486-4490.
13. Liu, Haitao, et al. "Novel, low-cost solid-liquid-solid process for the synthesis of α-Si3N4 nanowires at lower temperatures and their luminescence properties." Scientific reports 5 (2015).
14. Wang, Qiushi, et al. "Epitaxial growth of asymmetric α-silicon nitride nanocombs." Materials Research Bulletin 45.7 (2010): 888-891.
15. Huang, Juntong, et al. "Co-catalyzed nitridation of silicon and in-situ growth of α-Si3N4 nanorods." Ceramics International 40.7 (2014): 11063-11070.
16. Xu, Yajie, et al. "Preparation of novel saw-toothed and riblike α-Si3N4 whiskers." The Journal of Physical Chemistry B 110.7 (2006): 3088-3092.
17. Arik, H., S. Saritas, and M. Gündüz. "Production of Si3N4 by carbothermal reduction and nitridation of sepiolite." Journal of materials science 34.4 (1999): 835-842.

## Claims

1. A method of making fibrous silicon nitride network structures, the method comprises the steps of:
providing of a silicon powder;
applying selective laser sintering on said silicon powder, thereby creating a shaped silicon network product with complex geometry and open porosity; and
nitridization of said shaped silicon network product in nitrogen, ammonia diluted in
nitrogen into a silicon nitride component, with the fibre growth taking place during the nitridation,
wherein a catalyst in the amount of up to 10 weight per cent is added in the step of nitridization, said catalyst selected from a group consisting of Ni, Fe, carbon-black, NiO, MnO, Cr₂O₃, CeO₂, Co₃O₄, Fe₂O₃.

2. A method as in claim 1, further comprising heat treatment of said silicon nitride component at temperature range of 1000-1800 °C for 1-20 hours to improve the mechanical properties and increase the density of the component.

3. A method as in claims 1 to 2, wherein said silicon powder has an average particle size 20 to 40µm, a laser power from 400 to 1200mA with point distance from 10 to 30 µm and an exposure time from 100 to 275 µsec is used for selective laser sintering.

4. A method as in claims 1 to 3, wherein the step of nitridization is carried out at 1100-1700 °C for at least 1 hour.

## Patentansprüche

1. Ein Verfahren zur Herstellung von faserigen Siliziumnitrid-Netzwerkstrukturen, wobei dieses die folgenden Schritte umfasst:
Bereitstellung von Siliziumpulver;
Anwenden des selektiven Lasersinterns auf das Siliziumpulver, wodurch ein geformtes Siliziumnetzwerkprodukt mit komplexer Geometrie und offener Porosität entsteht; und
Nitrieren dieses geformten Siliziumnetzwerkprodukts in Stickstoff, Ammoniak, verdünnt in einer Siliziumnitrid-Komponente, wobei das Faserwachstum während der Nitrierung stattfindet, worin ein Katalysator in der Menge von bis zu 10 Gewichtsprozent bei dem Schritt des Nitrierens zugegeben wird, wobei dieser Katalysator aus einer Gruppe ausgewählt wird, die aus Ni, Fe, Ruß, NiO, MnO, Cr₂O₃, CeO2, Co₃O₄, Fe₂O₃ besteht.

2. Ein Verfahren wie in Anspruch 1, das zusätzlich eine Wärmebehandlung der Siliziumnitridkomponente in einem Temperaturbereich von 1000-1800°C für 1-20 Stunden umfasst, um die mechanischen Eigenschaften zu verbessern und die Dichte der Komponente zu erhöhen.

3. Ein Verfahren wie in den Ansprüchen 1 und 2, wobei das Siliziumpulver eine durchschnittliche Teilchengröße von 20 bis 40 µm hat und ein Laserpulver von 400 bis 1.200 mA mit einem Punktabstand von 10 bis 30 µm und eine Belichtungszeit von 100 bis 275 µsec zur selektiven Lasersintern eingesetzt wird.

4. Ein Verfahren wie in den Ansprüchen 1 bis 3, wobei der Schritt des Nitrierens bei 1100-1700 °C für mindestens 1 Stunde durchgeführt wird.

## Revendications

1. Procédé de fabrication de structures de réseau fibreux de nitrure de silicium, procédé comprenant les étapes suivantes:
apport de poudre de silicium;
frittage laser sélectif sur ladite poudre de silicium pour créer un produit de réseau de silicium structuré avec une géométrie complexe et une porosité ouverte; et
nitruration dudit produit de réseau de silicium structuré dans de l'azote, de l'ammoniac dilué dans un composant de nitrure de silicium, le développement des fibres ayant lieu pendant la nitruration où un catalyseur en une quantité allant jusqu'à 10% en poids est ajouté à l'étape de nitruration, ledit catalyseur étant dans un groupe constitué de Ni, Fe, noir de carbone, NiO, MnO, Cr₂O₃, CeO2, Co₃O₄, Fe₂O₃

2. En respect de la revendication 1, comprenant en outre un traitement thermique dudit composant de nitrure de silicium dans une plage de température de 1000 à 1800 °C pendant 1 à 20 heures pour améliorer les propriétés mécaniques et augmenter la densité du composant.

3. En respect des revendications 1 à 2, dans lesquelles la taille moyenne des particules de ladite poudre de silicium est comprise entre 20 à 40 µm, une fusion sélective par laser (laser powder) de 400 à 1200 mA avec une distance de point de 10 à 30 µm et un temps d'exposition de 100 à 275 µsec sont utilisés pour le frittage laser sélectif.

4. En respect des revendications 1 à 3, dans lesquelles l'étape de nitruration est effectuée à 1100 - 1700 °C pendant au moins 1 heure.
